# EUROPEAN PATENT SPECIFICATION

(11) **EP 2 615 130 B1**
(45) Date of publication and mention of the grant of the patent: **28.09.2016**
(21) Application number: 11823467.3
(22) Date of filing: 01.09.2011
(51) Int. Cl.: C08J 9/06, C08J 9/32

(54) **FOAMABLE RESIN COMPOSITION AND FOAM MOLDED BODY**
SCHÄUMBARE HARZZUSAMMENSETZUNG UND SCHAUMSTOFFFORMKÖRPER
COMPOSITION DE RÉSINE MOUSSABLE ET CORPS MOULÉ PAR MOUSSAGE

(30) Priority: 06.09.2010 JP 2010199095
(43) Date of publication of application: 17.07.2013
(73) Proprietor: Sekisui Chemical Co., Ltd., Osaka-shi, Osaka 530-0047 (JP)
(72) Inventor: YAMAUCHI Hiroshi, Mishima-gun Osaka 618-0021 (JP); MORITA Hiroyuki, Mishima-gun Osaka 618-0021 (JP); NATSUI Hiroshi, Mishima-gun Osaka 618-0021 (JP)
(74) Representative: Hart-Davis, Jason
(86) International application number: PCT/JP2011/069868
(87) International publication number: WO 2012/032991

(56) References cited:
- WO-A1-2010/052972
- WO-A1-2011/118437
- JP-A- 2005 212 377
- JP-A- 2005 271 499
- JP-A- 2007 246 578
- JP-A- 2007 246 578
- JP-A- 2009 221 429
- JP-B- 58 042 209
- JP-B- 58 042 212
- US-A1- 2007 071 939

## Description

### TECHNICAL FIELD

The present invention relates to a foamable resin composition which enables foam molding at a high expansion ratio and reduction of open cells. The present invention also relates to a foam molded body produced from the foamable resin composition.

### BACKGROUND ART

Plastic foams are used for various applications because of showing various properties such as heat-shielding property, heat insulation, sound insulation, sound absorbency, vibration resistance, and weight saving, depending on the material of the foams and the state of formed bubbles. Generally, plastic foams in many cases are produced using a pelleted masterbatch which is prepared by adding a foaming agent to a matrix resin such as a thermoplastic resin, and forming the mixture into pellets. The masterbatch is then added to a matrix resin, and the resulting mixture is foam-molded by a molding method such as injection molding and extrusion molding to produce a foam. Use of such a masterbatch ensures the dispersibility of foaming agents and the workability during molding.

Examples of the foaming agent added to a masterbatch include chemical foaming agents. For example, Patent Literature 1 discloses a foam pellet produced by kneading at least an ethylene-α-olefin copolymer and a foaming agent and molding the resulting mixture. The foaming agent is therein exemplified by azo compounds, hydrazine derivatives, and bicarbonates.

The foaming agent may also be thermal expansion microcapsules produced by filling a thermoplastic shell polymer with a volatile liquid which turns into gas at a temperature not more than the softening point of the shell polymer. When such thermal expansion microcapsules are heated, the volatile liquid turns into gas, and the shell polymer softens and expands. Patent Literature 2, for example, discloses a resin composition which includes a thermoplastic resin whose melting point or softening point is not higher than 100°C, and thermal expansion microcapsules which expand at 100°C to 200°C.

The use of chemical foaming agents enables foam molding at high expansion ratios; however, open cells tend to appear due to collection of the gas generated by the decomposition of the chemical foaming agents, which results in problems such as reduced mechanical properties and low surface quality of molded bodies, and also results in reduced durability caused by the soakage of moisture and the like into the molded bodies. On the other hand, the use of thermal expansion microcapsules can suppress the generation of open cells; however, the expansion ratio becomes lower than in the case where the chemical foaming agents are used.

To counter these problems, for example, Patent Literature 3 discloses a foam produced from a resin composition which includes a chemical foaming agent and thermal expansion microcapsules at a certain blending weight ratio based on thermoplastic resin. Patent Literature 3 states that a composite plate having the foam structure described therein has high surface quality and light weight. However, high expansion ratios along with sufficient suppression of open cells has not yet been achieved by such a method of only blending the thermal expansion microcapsules and a chemical foaming agent at a certain blending weight ratio.

In addition, **Patent Literature 4** discloses a thermally expandable microcapsule, which comprises a shell made of a polymer and a volatile expansion agent as a core agent encapsulated in the shell, with controlled storage elastic modulus (E') of the shell, and a maximum displacement amount measured by thermomechanical analysis being 300 µm or more.

### CITATION LIST

### Patent Literature

Patent Literature 1: Japanese Kokai Publication 2000-178372 (JP-A 2000-178372)
Patent Literature 2: Japanese Kokai Publication 2000-17103 (JP-A 2000-17103)
Patent Literature 3: Japanese Kokai Publication 2005-212377 (JP-A 2005-212377)
**Patent Literature 4:** WO 2010/052972

### SUMMARY OF INVENTION

### Technical Problem

The present invention aims to provide a foamable resin composition that enables foam molding at high expansion ratios and reduction of open cells. The present invention also aims to provide a foam molded body produced from the foamable resin composition.

### Solution to Problem

The present invention provides a foamable resin composition **as defined in claim 1** including a thermoplastic resin, thermal expansion microcapsules, and a chemical foaming agent, wherein Ts is not lower than 120°C, Tmax is not lower than 190°C, and Ts - Tc is not lower than -30°C and not higher than 6°C, where Ts denotes a foaming starting temperature of the thermal expansion microcapsules, Tmax denotes a maximum foaming temperature of the thermal expansion microcapsules, and Tc denotes a decomposition temperature of the chemical foaming agent.

The present invention is described below in more detail.

Combination use of thermal expansion microcapsules and a chemical foaming agent is an effective way for the achievement of a high expansion ratio along with sufficient suppression of open cells. The present inventors, however, have found out the following facts. When a chemical foaming agent decomposes at a lower temperature than the foaming starting temperature of thermal expansion microcapsules, the gas due to the decomposition of the chemical foaming agent is generated before the thermal expansion microcapsules foam. As a result, open cells are not sufficiently suppressed. On the other hand, when thermal expansion microcapsules foam at an extremely lower temperature than the decomposition temperature of the chemical foaming agent, foam molding at a high expansion ratio is still difficult.

Also, the present inventors have found out that foam molding at a high expansion ratio and reduction of open cells in a foamable resin composition containing a thermoplastic resin can be simultaneously achieved by the below method. The method is: using thermal expansion microcapsules and a chemical foaming agent in combination, and setting the foaming starting temperature of the thermal expansion microcapsules, the maximum foaming temperature of the thermal expansion microcapsules, and the difference between the foaming starting temperature of the thermal expansion microcapsules and the decomposition temperature of the chemical foaming agent within a certain range. Thereby, the present invention has been accomplished.

The foamable resin composition of the present invention contains a thermoplastic resin, thermal expansion microcapsules, and a chemical foaming agent.

The foamable resin composition herein includes masterbatches. Specifically, the foamable resin composition of the present invention may be a masterbatch which contains a thermoplastic resin, thermal expansion microcapsules, and a chemical foaming agent. The thermal expansion microcapsules may be directly added to the foamable resin composition of the present invention, or may be added as a masterbatch which contains the thermal expansion microcapsules. Similarly, the chemical foaming agent may be directly added to the foamable resin composition, or may be added as a masterbatch which contains the chemical foaming agent.

In the foamable resin composition of the present invention, Ts is not lower than 120°C, where Ts denotes the foaming starting temperature of the thermal expansion microcapsules. If Ts is lower than 120°C, the thermal expansion microcapsules start foaming at a low temperature, which may lead to too early foaming at a processing temperature in the middle of the production of a foamable resin composition, whereby foam molding at high expansion ratios becomes difficult. Ts is preferably not lower than 130°C, and more preferably not lower than 140°C.

Here, the foaming starting temperature of the thermal expansion microcapsules refers to a temperature at which the displacement value in the height direction turns positive when the thermal expansion microcapsules are heated with a thermal mechanical analyzer (TMA).

The upper limit of the Ts is not particularly limited, and is preferably 250°C, and more preferably 220°C.

In the foamable resin composition of the present invention, the Tmax is not lower than 190°C, where Tmax denotes the maximum foaming temperature of the thermal expansion microcapsules. If the Tmax is lower than 190°C, the thermal expansion microcapsules undesirably foam because of the shear force caused in the production of the foamable resin composition. As a result, stable production of an unfoamed foamable resin composition becomes difficult. Even if a foamable resin composition is obtained, foam molding at high expansion ratios at high molding temperatures is difficult. The Tmax is preferably not lower than 195°C, and more preferably not lower than 200°C.

Here, the maximum foaming temperature of the thermal expansion microcapsules refers to a temperature at which the displacement value of the thermal expansion microcapsules reaches the maximum value when the diameter of the thermal expansion microcapsules is being measured with a thermal mechanical analyzer (TMA) during heating of the thermal expansion microcapsules from normal temperature.

The upper limit of the Tmax is not particularly limited, and is preferably 300°C, and more preferably 280°C.

In the foamable resin composition of the present invention, ΔT1/2 is preferably not lower than 50°C, where ΔT1/2 denotes a temperature range having an expansion ratio of not less than a half of the expansion ratio of the thermal expansion microcapsules at the maximum foaming temperature. If the ΔT1/2 is lower than 50°C, the thermal expansion microcapsules may not sufficiently foam at a molding temperature, whereby foam molding at high expansion ratios may not be achieved. The ΔT1/2 is more preferably not lower than 60°C.

Here, the temperature range having an expansion ratio of not less than a half of the expansion ratio of the thermal expansion microcapsules at the maximum foaming temperature refers to a temperature range having a displacement value of not less than a half of the maximum displacement value of the thermal expansion microcapsules when the diameter of the thermal expansion microcapsules is being measured with a thermal mechanical analyzer (TMA) during heating of the thermal expansion microcapsules from normal temperature to 300°C. In the case where, after passing the maximum displacement value, the displacement value does not decrease to not more than a half of the maximum displacement value by the time the temperature reaches 300°C, i.e., in the case of thermal expansion microcapsules with high durability, the ΔT1/2 is defined as the difference between the temperature having a half displacement value of the maximum displacement value at a lower temperature side, and 300°C.

The upper limit of ΔT1/2 is not particularly limited, and it is preferably 150°C, and more preferably 120°C.

In the foamable resin composition of the present invention, the lower limit of Ts - Tc is -30°C and the upper limit thereof is 6°C, where Ts denotes the foaming starting temperature of the thermal expansion microcapsules and Tc denotes the decomposition temperature of the chemical foaming agent. Ts - Tc in the above range contributes to foam molding of the foamable resin composition of the present invention at high expansion ratios and reduction of open cells. This is presumably because of the following reasons. The thermal expansion microcapsules start foaming almost at the same time as the chemical foaming agent decomposes to generate gas. The generated gas is taken into the expanded thermal expansion microcapsules. As a result, open cells are reduced and the closed cells grow in diameter.

More specifically, when the foamable resin composition of the present invention is foam-molded, the thermal expansion microcapsules firstly start expanding. Then, the chemical foaming agent also starts decomposing to generate gas, and the gas flows into the shell polymer of the thermal expansion microcapsules. This gas enhances the pressure in the thermal expansion microcapsules under heating, whereby the thermal expansion microcapsules further expand. As a result, the closed cells formed from the thermal expansion microcapsules become extremely large in diameter, whereby a high expansion ratio is obtained. On the other hand, the open cells caused by the chemical foaming agent are reduced. Thereby, the resulting foam molded body can have properties such as a high expansion ratio, high strength, and excellent appearance at the same time. In addition, the foam molded body can solve the problem of reduced durability due to the soakage of moisture and the like into the molded body, which occurs in the case where the chemical foaming agent is used independently.

The gas generated by the decomposition of the chemical foaming agent is taken into the thermal expansion microcapsules. Therefore, the gas does not come out of molded body during molding, and thus the problem of mold contamination can also be solved.

More specifically, the gas generated by the decomposition of the chemical foaming agent conventionally came out of molded bodies, causing mold erosion and mold rust. Accordingly, continuous use of such eroded molds brought other problems such as rough surface and bleaching of the molded bodies and shorter life of the mold. Such problems can be solved by performing foam molding using the foamable resin composition of the present invention. Moreover, operations such as rustproofing of molds and removing rust are no longer needed.

If Ts - Tc is below -30°C, foam molding at high expansion ratios is difficult. If Ts - Tc exceeds 6°C, generation of open cells cannot be sufficiently suppressed. A preferable lower limit of Ts - Tc is -20°C, and a preferable upper limit thereof is 3°C. A more preferable lower limit thereof is -15°C, and a more preferable upper limit thereof is 0°C.

Tc is not particularly limited, and is preferably not lower than 120°C. If Tc is lower than 120°C, the chemical foaming agent decomposes at a lower temperature, possibly resulting in too early decomposition at a processing temperature in the middle of the production of the foamable resin composition. Thus, foam molding at high expansion ratios may be difficult. Tc is preferably not lower than 130°C.

Here, the decomposition temperature of the chemical foaming agent refers to a temperature at which the weight loss of the foaming agent reaches the inflection point when the chemical foaming agent is heated at 2°C/min.

The upper limit of Tc is not particularly limited, and it is preferably 280°C, and more preferably 250°C.

The thermoplastic resin is not particularly limited, and any thermoplastic resins for usual foam molding can be used. Specific examples of the thermoplastic resin include polyolefins such as low-density polyethylene (LDPE) and polypropylene (PP), copolymers of ethylene-vinyl acetate (EVA), vinyl chloride, polystyrene, thermoplastic elastomers, and copolymers of ethylene-methyl methacrylate (EMMA). Preferable among these are LDPE, EVA, and EMMA, in terms of their low melting point and easy processability. One of these may be used alone, or two or more of these may be used in combination.

The thermoplastic resin preferably has a lower polarity than that of the thermal expansion microcapsules and that of the chemical foaming agent. A thermoplastic resin with a lower polarity tends to cause ubiquity of the gas generated by the decomposition of the chemical foaming agent on the surface of the thermal expansion microcapsules. Thus, the gas tends to flow into the shell polymer. As a result, foam molding at further higher expansion ratios and further reduction of open cells are possible.

Specifically, the SP (Solubility Parameter) value of the thermoplastic resin is preferably not more than 10.5, and the SP value of the thermal expansion microcapsules and the SP value of the chemical foaming agent are both preferably not less than 11.

Here, the thermal expansion microcapsules refer to microcapsules that contain a volatile liquid as a core agent encapsulated by a shell polymer obtainable from a polymerizable monomer. In the thermal expansion microcapsules having such a structure, the core agent turns into gas by the heat during molding, and the shell polymer softens and expands. Thus, the thermal expansion microcapsules can work as a foaming agent.

The polymerizable monomer preferably contains a nitrile monomer. A polymerizable monomer containing a nitrile monomer can improve the heat resistance and the gas-barrier properties of the thermal expansion microcapsules, which enables foam molding at high expansion ratios even at high molding temperatures.

The nitrile monomer is not particularly limited, and examples thereof include acrylonitrile, methacrylonitrile, α-chloroacrylonitrile, α-ethoxy acrylonitrile, and fumaric nitrile. Particularly preferable among these are acrylonitrile and methacrylonitrile. One of these may be used alone, or two or more of these may be used in combination.

The amount of the nitrile monomer is not particularly limited, and a preferable lower limit thereof is 50 wt%, and a preferable upper limit thereof is 99 wt%, in 100 wt% of the whole polymerizable monomer. If the amount of the nitrile monomer is less than 50 wt%, the gas-barrier properties of the thermal expansion microcapsules to be obtained may be reduced. If the amount of the nitrile monomer is more than 99 wt%, the amount of the carboxyl group-containing monomer, which will be described later, is relatively reduced in the whole polymerizable monomer. As a result, the heat resistance of the thermal expansion microcapsules may be reduced and thus foam molding at high expansion ratios at high molding temperatures may be impossible.

According to the present invention, the polymerizable monomer contains a carboxyl group-containing monomer. A polymerizable monomer which contains a carboxyl group-containing monomer can improve the heat resistance of the thermal expansion microcapsules. Thus, foam molding at high expansion ratios is possible even at high molding temperatures. In addition, the shell polymer has a higher polarity, whereby the gas generated by the decomposition of the chemical foaming agent tends to easily flow into the shell polymer. As a result, foam molding at further high expansion ratios and further reduction of open cells are possible.

The carboxyl group-containing monomer is not particularly limited and examples thereof include unsaturated monocarboxylic acids such as acrylic acid, methacrylic acid, ethacrylic acid, crotonic acid, and cinnamic acid; and unsaturated dicarboxylic acids such as maleic acid, itaconic acid, fumaric acid, and citraconic acid. Preferable among these are acrylic acid, methacrylic acid, and itaconic acid, and particularly preferable is methacrylic acid in terms of better improvement in the heat resistance of the thermal expansion microcapsules to be obtained. One of these may be used alone, or two or more of these may be used in combination.

The amount of the carboxyl group-containing monomer is not particularly limited, and a preferable lower limit thereof is 1 wt%, and a preferable upper limit thereof is 50 wt%, in the whole polymerizable monomer. If the amount of the carboxyl group-containing monomer is less than 1 wt%, the heat resistance of the thermal expansion microcapsules may be reduced, and thus foam molding at high expansion ratios at high molding temperatures may be impossible. If the amount of the carboxyl group-containing monomer is more than 50 wt%, the gas-barrier properties of the thermal expansion microcapsules to be obtained may not be ensured, and thus the thermal expansion may not occur. A more preferable lower limit of the amount of the carboxyl group-containing monomer is 3 wt%, and a more preferable upper limit thereof is 30 wt%, in the whole polymerizable monomer.

In general, the polymerizable monomer may contain another monomer copolymerizable with monomers such as the nitrile monomer and the carboxyl group-containing monomer (hereinafter, simply referred to as additional monomer).

The above additional monomer is not particularly limited, and appropriate monomers may be selected according to the properties required by target thermal expansion microcapsules. Especially, the additional monomer is preferably selected such that the shell polymer is cross-linked and/or heat-curable. If the shell polymer is cross-linked and/or heat-curable, the durability of the thermal expansion microcapsules is improved, whereby foam molding at further high expansion ratios is possible.

Examples of the method for obtaining a cross-linked shell polymer include a method of using a cross-linkable monomer as the above additional monomer.

Examples of the cross-linkable monomer include divinyl benzene, ethylene glycol di(meth)acrylate, diethylene glycol di(meth)acrylate, triethylene glycol di(meth)acrylate, propylene glycol di(meth)acrylate, 1,4-butanediol di(meth)acrylate, 1,6-hexanediol di(meth)acrylate, 1,9-nonanediol di(meth)acrylate, di(meth)acrylate of a polyethylene glycol with a molecular weight of 200 to 600, glycerin di(meth)acrylate, trimethylolpropane di(meth)acrylate, trimethylolpropane tri(meth)acrylate, ethylene oxide-modified trimethylolpropane tri(meth)acrylate, pentaerythritol tri(meth)acrylate, triallyl formal tri(meth)acrylate, pentaerythritol tetra(meth)acrylate, dipentaerythritol hexa(meth)acrylate, and dimethylol-tricyclodecane di(meth)acrylate. Preferable among these are ethylene glycol dimethacrylate, trimethylolpropane trimethacrylate, and 1,4-butanediol diacrylate, in terms of high reactivity and satisfactory durability due to a strong and elastic structure. One of these may be used alone, or two or more of these may be used in combination.

Examples of the method for obtaining a heat-curable shell polymer include a method of using the carboxyl group-containing monomer, and, as the above additional monomer, a monomer containing a functional group (s) reactive with a carboxyl group. In thermal expansion microcapsules produced by such a method, the carboxyl group reacts with the functional group(s) reactable with a carboxyl group by the heat during molding, which improves the durability of the thermal expansion microcapsules.

Here, in the case of the combination use of acrylic acid as the carboxyl group-containing monomer and acrylonitrile as the nitrile monomer, or in the case of the combination use of methacrylic acid as the carboxyl group-containing monomer and methacrylonitrile as the nitrile monomer, the nitrile monomer is included in the monomer containing a functional group(s) reactable with a carboxyl group. The combination use of the carboxyl group-containing monomer and the nitrile monomer leads to a reaction between the carboxyl group and the nitrile group by the heat during molding in the thermal expansion microcapsules to be obtained. Thus, the durability of the thermal expansion microcapsules is improved.

Examples of the monomer containing a functional group (s) reactable with a carboxyl group include N-methylol(meth) acrylamide, glycidyl(meth)acrylate, 2-hydroxyethyl(meth) acrylate, 2-hydroxypropyl(meth)acrylate, 2-hydroxybutyl (meth)acrylate, 2-hydroxy-3-phenoxypropyl(meth)acrylate, N,N-dimethylaminoethyl(meth)acrylate, N,N-dimethylaminopropyl(meth)acrylate, magnesium monoacrylate, and zinc monoacrylate. Preferable among these are glycidyl(meth)acrylate and zinc monoacrylate. One of these may be used alone, or two or more of these may be used in combination.

Examples of the additional monomer include acrylic acid esters such as methyl acrylate, ethyl acrylate, butyl acrylate, and dicyclopentenyl acrylate; methacrylic acid esters such as methyl methacrylate, ethyl methacrylate, butyl methacrylate, and isobornyl methacrylate; and vinyl monomers such as vinyl chloride, vinylidene chloride, vinyl acetate, and styrene. One of these may be used alone, or two or more of these may be used in combination.

If the polymerizable monomer includes the additional monomer, the amount of the additional monomer is not particularly limited, and the upper limit thereof is preferably 50 wt% in the whole polymerizable monomer. If the amount of the additional monomer exceeds 50 wt%, the amount of the carboxyl group-containing monomer, the nitrile monomer, and the like relatively decreases in the whole polymerizable monomer. This may cause deterioration of the heat resistance, gas-barrier properties, and the like in the thermal expansion microcapsules, and foam molding at high expansion ratios at high molding temperatures may be impossible.

The polymerizable monomer may contain a metal cation salt.

The addition of a metal cation salt to the polymerizable monomer enables ionic cross-linking between the carboxyl group of the carboxyl group-containing monomer and the metal cation which forms the metal cation salt. This improves the cross-linking efficiency of the shell polymer, and thereby the heat resistance is improved. As a result, foam molding at high expansion ratios is possible even at high molding temperatures. In addition, the ionic cross-linking suppresses reduction in the elastic modulus of the shell polymer, whereby the thermal expansion microcapsules are less likely to break or contract in foam molding by a molding method with a strong shear force, such as kneading molding, calendar molding, extrusion molding, or injection molding. As a result, foam molding at high expansion ratios is possible.

The metal cation which forms the metal cation salt is not particularly limited as long as it is a metal cation which can be ionically cross-linked with the carboxyl group of the carboxyl group-containing monomer. Examples thereof include ions of elements such as Na, K, Li, Zn, Mg, Ca, Ba, Sr, Mn, Al, Ti, Ru, Fe, Ni, Cu, Cs, Sn, Cr, and Pb. Preferable among these are ions of Ca, Zn, and Al, which are divalent to trivalent metal cations, and particularly preferable is a Zn ion. Moreover, the metal cation salt is preferably a hydroxide of these metal cations. Each metal cation salts formed from these metal cations may be used alone, and two or more of them may be used in combination.

If two or more of the metal cation salts are used in combination, preferred is, for example, a combination of a salt formed from an ion of an alkali or alkaline-earth metal and a salt formed from a cation of a metal other than the alkali and alkaline-earth metal. The ion of an alkali or alkaline-earth metal activates a functional group such as a carboxyl group to promote the ionic cross-linking between the functional group such as a carboxyl group and the cation of a metal other than the alkali or alkaline-earth metal.

The alkali or alkaline-earth metal is not particularly limited, and examples thereof include Na, K, Li, Ca, Ba, and Sr. Preferable among these are Na and K, which have a strong basicity.

If the metal cation salt is added to the polymerizable monomer, the amount of the metal cation salt is not particularly limited. A preferable lower limit thereof is 0.1 parts by weight, and a preferable upper limit thereof is 5.0 parts by weight, based on 100 parts by weight of the whole polymerizable monomer. If the amount of the metal cation salt is below 0.1 parts by weight, the effect of improving the heat resistance of the thermal expansion microcapsules may not be sufficiently achieved. If the amount of the metal cation salt exceeds 5.0 parts by weight, the thermal expansion microcapsules to be obtained may not foam at high expansion ratios.

According to the present invention, the polymerizable monomer contains a carboxyl group-containing monomer, which is used together with a heat-curable resin containing a functional group(s) reactable with a carboxyl group (hereinafter, simply referred to as heat-curable resin).

In thermal expansion microcapsules containing such a polymerizable monomer, the carboxyl group reacts with the functional group (s) reactable with a carboxyl group by the heat during molding. Thereby, the durability of the thermal expansion microcapsules is improved, and foam molding at further high expansion ratios is possible.

Such a reaction between the carboxyl group and the functional group(s) reactable with a carboxyl group is initiated not when the polymerizable monomer is polymerized, but by the heat when the foamable resin composition is molded. Specifically, the heat-curable resin is not involved in the polymerization reaction when the polymerizable monomer is polymerized to obtain thermal expansion microcapsules. Accordingly, the heat-curable resin is not directly bonded to the main chain of the shell polymer to be obtained. As a result, the durability can be improved without deteriorating the flexibility of the thermal expansion microcapsules and without inhibiting the expansion thereof.

The heat-curable resin does not contain a radical-polymerizable double bond in a molecule in order not to be involved in the polymerization reaction when the polymerizable monomer is polymerized to obtain thermal expansion microcapsules. A heat-curable resin not containing a radical-polymerizable double bond in a molecule is not directly bonded to the main chain of the shell polymer, and thus does not deteriorate the flexibility of the thermal expansion microcapsules or inhibit the expansion thereof.

The heat-curable resin is not particularly limited as long as it contains a functional group(s) reactable with a carboxyl group, and it preferably contains two or more of functional groups reactable with a carboxyl group in a molecule. Examples of the heat-curable resin include epoxy resins, phenolic resins, melamine resins, urea resins, polyimide resins, and bismaleimide resins. Preferable among these are epoxy resins and phenolic resins.

The epoxy resins are not particularly limited, and examples thereof include bisphenol A type epoxy resin, bisphenol F type epoxy resin, phenol novolac epoxy resin, cresol novolac epoxy resin, dicyclopentadiene epoxy resin, and glycidyl amine epoxy resin. The phenolic resins are not particularly limited, and examples thereof include novolac phenolic resin, resole phenolic resin, and benzylic ether phenolic resin. Preferable among these is novolac phenolic resin.

The amount of the heat-curable resin is not particularly limited. A preferable lower limit thereof is 0.01 parts by weight, and a preferable upper limit thereof is 30 parts by weight, based on 100 parts by weight of the whole polymerizable monomer. If the amount of the heat-curable resin is below 0.01 parts by weight, the effect of improving the durability of the thermal expansion microcapsules may not be sufficiently achieved. If the amount of the heat-curable resin exceeds 30 parts by weight, the gas-barrier properties of the thermal expansion microcapsules to be obtained may not be ensured, whereby thermal expansion may not occur. A more preferable lower limit is 0.1 parts by weight, and a more preferable upper limit is 15 parts by weight.

The polymerizable monomer may further contain substances such as stabilizers, ultraviolet absorbers, antioxidants, antistatic agents, flame retardants, silane coupling agents, and colorants, according to need.

The polymerization initiator used for the polymerization of the polymerizable monomer is not particularly limited, and examples thereof include dialkyl peroxides, diacyl peroxides, peroxyesters, peroxydicarbonates, and azo compounds.

The dialkyl peroxides are not particularly limited, and examples thereof include methyl ethyl peroxide, di-t-butyl peroxide, dicumyl peroxide, and isobutyl peroxide.

The diacyl peroxides are not particularly limited, and examples thereof include benzoyl peroxide, 2,4-dichlorobenzoyl peroxide, and 3,5,5-trimethyl hexanoyl peroxide.

The peroxyesters are not particularly limited, and examples thereof include t-butyl peroxypivalate, t-hexyl peroxypivalate, t-butyl peroxy neodecanoate, t-hexyl peroxyneodecanoate, 1-cyclohexyl-1-methylethyl peroxyneodecanoate, 1,1,3,3-tetramethylbutyl peroxyneodecanoate, cumyl peroxyneodecanoate, and (a,a-bis-neodecanoyl peroxy)diisopropyl benzen.

The peroxydicarbonates are not particularly limited, and examples thereof include bis(4-t-butyl cyclohexyl) peroxydicarbonate, di-n-propyl-peroxydicarbonate, diisopropyl peroxydicarbonate, di(2-ethylethylperoxy) dicarbonate, dimethoxybutyl peroxydicarbonate, and di(3-methyl-3-methoxybutyl peroxy)dicarbonate.

The azo compounds are not particularly limited, and examples thereof include 2,2'-azobisisobutyronitrile, 2,2'-azobis(4-methoxy-2,4-dimethyl valeronitrile), 2,2'-azobis(2,4-dimethyl valeronitrile), and 1,1'-azobis(1-cyclohexanecarbonitrile).

The volatile liquid is not particularly limited, and is preferably a low-boiling point organic solvent. Specific examples thereof include low-molecular-weight hydrocarbons such as ethane, ethylene, propane, propene, n-butane, isobutane, butene, isobutene, n-pentane, isopentane, neopentane, n-hexane, heptane, isooctane, nonane, decane, cyclohexane, and petroleum ether; chlorofluorocarbons such as CCl₃F, CCl₂F₂, CClF₃, and CClF₂-CClF₂; and tetraalkylsilanes such as tetramethylsilane, trimethylethylsilane, trimethylisopropyl silane, and trimethyl-n-propylsilane. Preferable among these are isobutane, n-butane, n-pentane, isopentane, n-hexane, and petroleum ether, in terms of rapid initiation of foaming of the thermal expansion microcapsules to be obtained and foaming thereof at high expansion ratios. One of these may be used alone, or two or more of these may be used in combination.

In addition, the volatile liquid may be a pyrolysis compound which turns into gas via pyrolysis by heating.

The amount of the volatile liquid in the thermal expansion microcapsules is not particularly limited, and a preferable lower limit is 10 wt% and a preferable upper limit is 25 wt%. If the amount of the volatile liquid is below 10 wt%, the thermal expansion microcapsules to be obtained have too thick a shell, whereby the foaming properties may be reduced. If the amount of the volatile liquid exceeds 25 wt%, the thermal expansion microcapsules to be obtained may have reduced shell strength, whereby the breaking and contraction tend to occur at elevated temperatures. As a result, foaming at high expansion ratios may not be possible.

The volume average particle size of the thermal expansion microcapsules is not particularly limited, and a preferable lower limit thereof is 10 µm and a preferable upper limit thereof is 50 µm. If a foamable resin composition produced from thermal expansion microcapsules with a volume average particle diameter of less than 10 µm is used, the foam molded body may have too small bubbles, which may not achieve a sufficient weight saving. If a foamable resin composition is produced from thermal expansion microcapsules with a volume average particle diameter of more than 50 µm, the resulting foam molded body may have too large bubbles, which may cause problems in strength and the like. A more preferable lower limit of the volume average particle diameter is 15 µm, and a more preferable upper limit thereof is 40 µm.

The chemical foaming agent satisfies the range of Ts - Tc described above, and may be a chemical foaming agent used for usual foam molding. In addition, the decomposed product of the chemical foaming agent preferably contains nitrogen gas, carbon monoxide gas, carbon dioxide gas, or water. If the decomposed product of the chemical foaming agent contains nitrogen gas, carbon monoxide gas, carbon dioxide gas, or water, the gas generated by the decomposition of the chemical foaming agent tends to flow into the shell polymer. Thereby, foam molding at further high expansion ratios and further reduction of open cells are possible.

Specific examples of the main agent of the chemical foaming agent include inorganic foaming agents such as sodium hydrogen carbonate; and organic foaming agents such as azodicarbonamide (ADCA), dinitroso pentamethylene tetramine (DPT), and 4,4'-oxybis(benzene sulfonyl hydrazide) (OBSH). Preferable among these are ADCA and sodium hydrogen carbonate, in terms of easier control of the decomposition temperature using a foaming aid. One of these may be used alone, or two or more of these may be used in combination.

According to the present invention, the chemical foaming agent consists of a mixture obtainable by adding a foaming aid to the main agent. The addition of the foaming aid enables adjustment of the decomposition temperature Tc of the chemical foaming agent to a desired temperature. The foaming aid is **selected from the group consisting of:** zinc stearate, urea, calcium stearate, calcium carbonate, and zinc oxide. Preferable among these are zinc stearate and zinc oxide, in terms of easiness of the adjustment of the decomposition temperature of the chemical foaming agent in the range of the processing temperature of the foam molding. The amount of the foaming aid is not particularly limited, and a preferable lower limit is 1 part by weight and a preferable upper limit is 40 parts by weight, based on 100 parts by weight of the chemical foaming agent.

The amount of the thermal expansion microcapsules and the chemical foaming agent is not particularly limited. A preferable lower limit of the total amount of the thermal expansion microcapsules and the chemical foaming agent is 10 parts by weight, and a preferable upper limit thereof is 90 parts by weight, based on 100 parts by weight of the thermoplastic resin. If the total amount of the thermal expansion microcapsules and the chemical foaming agent is below 10 parts by weight, foam molding at high expansion ratios may not be possible. If the total amount of the thermal expansion microcapsules and the chemical foaming agent exceeds 90 parts by weight and the foamable resin composition is a masterbatch, the masterbatch tends to be brittle, whereby the masterbatch may not be able to keep its shape. A more preferable lower limit of the total amount of the thermal expansion microcapsules and the chemical foaming agent is 20 parts by weight, and a more preferable upper limit thereof is 80 parts by weight, based on 100 parts by weight of the thermoplastic resin.

According to the present invention, the lower limit of the ratio of the thermal expansion microcapsules in the total amount of the thermal expansion microcapsules and the chemical foaming agent is 10 wt%, and the upper limit thereof is 95 wt%. If the ratio of the thermal expansion microcapsules is below 10 wt%, occurrence of open cells may not be suppressed. If the ratio of the thermal expansion microcapsules exceeds 95 wt%, foam molding at high expansion ratios may not be possible. A more preferable lower limit of the ratio of the thermal expansion microcapsules in the total amount of the thermal expansion microcapsules and the chemical foaming agent is 30 wt%, and a more preferable upper limit thereof is 90 wt%.

The foamable resin composition of the present invention preferably further contains talc or silica. In a foamable resin composition containing talc or silica, the talc or silica works as a nucleating agent to promote the decomposition of the chemical foaming agent, whereby control of the foaming conditions becomes easier.

Especially, the thermal expansion microcapsules are preferably provided with the talc or silica on the surface. If thermal expansion microcapsules are provided with talc or silica on the surface, the decomposition of the chemical foaming agent and the flow of the gas generated from the decomposition into the shell polymer preferably proceed, whereby foam molding at further high expansion ratios and further reduction of open cells are possible.

Examples of the method for making talc or silica present on the surface of the thermal expansion microcapsules include a method in which, when the polymerizable monomer is polymerized to obtain thermal expansion microcapsules, talc or silica is added as a dispersion stabilizer to an aqueous dispersion medium which suspends oily substances such as the polymerizable monomer.

The method of producing the foamable resin composition of the present invention is not particularly limited. In the case where the foamable resin composition of the present invention is a masterbatch, examples thereof include the following method.

A base resin such as a thermoplastic resin, and optionally selected various additives and the like is/are preliminarily mixed with a co-rotating twin screw extruder or the like. Then, the mixture is heated to a prescribed temperature, and then the thermal expansion microcapsules and the chemical foaming agent are added thereto. The resulting mixture is further kneaded to produce a kneaded product. The kneaded product is cut into a pellet shape having a desired size with a pelletizer to obtain a masterbatch.

In the case where the foamable resin composition of the present invention is a masterbatch, examples of the method for producing the foamable resin composition of the present invention also include a method of kneading ingredients such as a base resin (e. g. the thermoplastic resin), the thermal expansion microcapsules, and the chemical foaming agent with a batch kneader, followed by producing a granulated masterbatch using a granulator; and a method of pelletizing the kneaded ingredients with an extruder and a pelletizer to form a pelletized masterbatch.

The kneader is not particularly limited as long as it can knead the thermal expansion microcapsules without breaking, and examples thereof include pressure kneaders and Banbury mixer.

The use of the foamable resin composition of the present invention enables foam molding at high expansion ratios and reduction of open cells. However, if the foamable resin composition slightly foams at the completion of the production, the foamable resin composition has difficulty in foaming at a desired expansion ratio when used for foam molding, and the variation of the size of bubbles is also greater.

The applications of the foamable resin composition of the present invention are not particularly limited. For example, a foam molded body can be produced by molding the foamable resin composition of the present invention by a molding method such as injection molding or extrusion molding, and making the resulting product foam by the heat during molding. The foam molded body which is a foam-molded product of the foamable resin composition of the present invention is another aspect of the present invention.

The foam molded body of the present invention has high expansion ratios, closed cells with uniform intervals, and good appearance. Accordingly, the foam molded body is excellent in weight saving, heat insulation, impact resistance, and rigidity, and can be suitably used for applications such as building materials for house, automotive members, shoe soles, and damping plates.

### Advantageous Effects of Invention

The present invention can provide a foamable resin composition which enables foam molding at high expansion ratios and reduction of open cells. The present invention can also provide a foam molded body produced from the foamable resin composition.

### BRIEF DESCRIPTION OF DRAWINGS

Fig. 1 shows a scanning electron micrograph of a section of a molded product produced from the masterbatch in Example 1.
Fig. 2 shows a scanning electron micrograph of a section of a molded product produced from the masterbatch in Example 2.
Fig. 3 shows a scanning electron micrograph of a section of a molded product produced from the masterbatch in Example 3.
Fig. 4 shows a scanning electron micrograph of a section of a molded product produced from the masterbatch in Example 4.
Fig. 5 shows a scanning electron micrograph of a section of a molded product produced from the masterbatch in Example 5.
Fig. 6 shows a scanning electron micrograph of a section of a molded product produced from the masterbatch in Example 6.
Fig. 7 shows a scanning electron micrograph of a section of a molded product produced from the masterbatch in Comparative Example 1.
Fig. 8 shows a scanning electron micrograph of a section of a molded product produced from the masterbatch in Comparative Example 2.
Fig. 9 shows a scanning electron micrograph of a section of a molded product produced from the masterbatch in Comparative Example 3.
Fig. 10 shows a scanning electron micrograph of a section of a molded product produced from the masterbatch in Comparative Example 4.
Fig. 11 shows a scanning electron micrograph of a section of a molded product produced from the masterbatch in Comparative Example 5.

### DESCRIPTION OF EMBODIMENTS

The present invention is described in more detail with reference to **E**xamples **1, 4 and 5,** but to which the present invention is not limited. **Following Examples 2, 3 and 6 are** e**xperimental reference examples, not according to appended claim 1.** In the examples and comparative examples, the foaming starting temperature Ts and the maximum foaming temperature Tmax of thermal expansion microcapsules were determined as follows.

Thermal expansion microcapsules (25 µg) were charged in an aluminum container having a diameter of 7 mm and a depth of 1 mm. The container was heated from 80°C to 300°C at a heating rate of 5°C/min with a force of 0.1 N given from the top using a thermal mechanical analyzer (TMA) (TMA Q400, product of TA Instruments). The displacement value of the measuring terminal in the height direction was measured. The temperature at which the displacement value turned positive was defined as the foaming starting temperature Ts, and the temperature at which the displacement value reached the maximum value was defined as the maximum foaming temperature Tmax.

The decomposition temperature Tc of the chemical foaming agent was determined as follows.

A chemical foaming agent (10 mg) was charged in an aluminum container having a diameter of 6 mm and a depth of 5 mm. The container was heated from 80°C to 300°C at a heating rate of 2°C/min with a thermogravimetric/differential thermal analysis (TG/DTA) equipment (TG/DTA6300, product of Seiko Instruments Inc.), and a weight loss curve was drawn. The inflection point of the curve was defined as the decomposition temperature Tc.

### EXAMPLES

### (Example 1)

### (1) Production of thermal expansion microcapsules

A polymerization reaction vessel was charged with water (250 parts by weight), sodium chloride (85 parts by weight) as a dispersion stabilizer, colloidal silica (product of Adeka corporation, 20 wt%) (25 parts by weight), and polyvinylpyrrolidone (product of BASF) (0.2 parts by weight) to prepare an aqueous dispersion medium.

Subsequently, to the aqueous dispersion medium was added an oily substance consisting of acrylonitrile (AN) (30 parts by weight), methacrylonitrile (MAN) (50 parts by weight), and methacrylic acid (MAA) (20 parts by weight) as polymerizable monomers; zinc hydroxide (0.5 parts by weight); epoxy resin (trade name: JER630, product of Japan Epoxy Resin Co., Ltd.) (0.2 parts by weight); azobisisobutyronitrile (1.0 part by weight) as a polymerization initiator; and isopentane (20 parts by weight) and isooctane (10 parts by weight) as volatile liquids. The mixture was suspended to prepare a dispersion liquid.

The obtained dispersion liquid was stirred and mixed with a homogenizer, charged into a pressure polymerization vessel purged with nitrogen, and reacted at a pressure of 0.5 MPa for five hours at 60°C, followed by four hours at 80°C, to produce a reaction product. The obtained reaction product was filtered and rinsed with water repeatedly, and then dried. Thus, thermal expansion microcapsules (Ts = 156°C, Tmax = 209°C) were obtained.

### (2) Production of foamable resin composition (masterbatch)

Low density polyethylene (LDPE) (50 parts by weight) and stearic acid (10 parts by weight) as a lubricant were kneaded with a banbury mixer. When the temperature of the kneaded product reached about 100°C, to the kneaded product were added the obtained thermal expansion microcapsules (35 parts by weight) and a mixture (15 parts by weight) of azodicarbonamide (ADCA) and zinc stearate (ADCA: zinc stearate = 90 : 10, Tc = 168°C), as a chemical foaming agent. The resulting mixture was further kneaded for 30 seconds, and then extruded and pelletized simultaneously to produce a masterbatch.

### (Example 2)

A masterbatch was obtained in the same manner as in Example 1, except that Expancel 950DU120 (Ts = 138°C, Tmax = 198°C) was used as thermal expansion microcapsules.

### (Example 3)

A polymerization reaction vessel was charged with water (250 parts by weight), sodium chloride (70 parts by weight) as a dispersion stabilizer, colloidal silica (45 parts by weight) (product of Adeka corporation, 20 wt%), and a diethanolamine-adipic acid condensate (0.5 parts by weight), to prepare an aqueous dispersion medium.

Subsequently, to the aqueous dispersion medium was added an oily substance consisting of acrylonitrile (AN) (35 parts by weight), methacrylonitrile (MAN) (35 parts by weight), methacrylic acid (MAA) (25 parts by weight), and ethylene glycol dimethacrylate (1.5 parts by weight) as polymerizable monomers; azobis(2,4-dimethyl valeronitrile) (0.5 parts by weight) as a polymerization initiator; and isopentane (10 parts by weight) and 2-methyl pentane (15 parts by weight) as volatile liquids. The mixture was suspended to prepare a dispersion liquid.

The obtained dispersion liquid was stirred and mixed with a homogenizer, charged into a pressure polymerization vessel purged with nitrogen, and reacted at a pressure of 0.5 MPa for eight hours at 60°C to produce a reaction product. The obtained reaction product was filtered and rinsed with water repeatedly, and then dried. Thus, thermal expansion microcapsules (Ts = 160°C, Tmax = 200°C) were obtained.

A masterbatch was obtained in the same manner as in Example 1, except that the obtained thermal expansion microcapsules were used.

### (Example 4)

A polymerization reaction vessel was charged with water (282 parts by weight), sodium chloride (88 parts by weight) as a dispersion stabilizer, colloidal silica (20 parts by weight) (product of Adeka corporation, 20 wt%), a diethanolamine-adipic acid condensate (0.8 parts by weight), and sodium nitrite (0.06 parts by weight), to prepare an aqueous dispersion medium.

Subsequently, to the aqueous dispersion medium was added an oily substance consisting of methacrylonitrile (MAN) (66 parts by weight) and methacrylic acid (MAA) (34 parts by weight) as polymerizable monomers, 2,2'-azobisisobutyronitrile (1.0 part by weight) as a polymerization initiator, and isopentane (30 parts by weight) as a volatile liquid. The mixture was suspended to prepare a dispersion liquid.

The obtained dispersion liquid was stirred and mixed with a homogenizer, charged into a pressure polymerization vessel purged with nitrogen, and reacted at a pressure of 0.5 MPa for 15 hours at 60°C, followed by nine hours at 70°C, to produce a reaction product. The obtained reaction product was filtered and rinsed with water repeatedly, and then dried. Thus, thermal expansion microcapsules (Ts = 171°C, Tmax = 255°C) were obtained.

A masterbatch was obtained in the same manner as in Example 1, except that the obtained thermal expansion microcapsules were used.

### (Example 5)

A masterbatch was obtained in the same manner as in Example 1, except that a mixture of azodicarbonamide (ADCA) and urea (ADCA:urea = 90:10, Tc = 150°C) was used as a chemical foaming agent instead of the mixture of azodicarbonamide (ADCA) and zinc stearate (ADCA:zinc stearate = 90:10, Tc = 168°C).

### (Example 6)

Amasterbatch was obtained in the same manner as in Example 1, except that sodium hydrogen carbonate (Tc = 150°C) was used as a chemical foaming agent, instead of the mixture of azodicarbonamide (ADCA) and zinc stearate (ADCA:zinc stearate = 90:10, Tc = 168°C).

### (Comparative Example 1)

A masterbatch was obtained in the same manner as in Example 1, except that azodicarbonamide (ADCA) (Tc = 205°C) was used as a chemical foaming agent, instead of the mixture of azodicarbonamide (ADCA) and zinc stearate (ADCA:zinc stearate = 90:10, Tc = 168°C).

### (Comparative Example 2)

A masterbatch was obtained in the same manner as in Example 4, except that a mixture of azodicarbonamide (ADCA) and urea (ADCA : urea = 90 : 10, Tc = 150°C) was used as a chemical foaming agent, instead of the mixture of azodicarbonamide (ADCA) and zinc stearate (ADCA:zinc stearate = 90:10, Tc = 168°C).

### (Comparative Example 3)

A masterbatch was obtained in the same manner as in Example 3, except that sodium hydrogen carbonate (Tc = 150°C) was used as a chemical foaming agent, instead of the mixture of azodicarbonamide (ADCA) and zinc stearate (ADCA:zinc stearate = 90:10, Tc = 168°C).

### (Comparative Example 4)

A masterbatch was obtained in the same manner as in Example 1, except that Advancell EMH 401 (Ts = 145°C, Tmax = 183°C) (Sekisui Chemical Co., Ltd.) was used as thermal expansion microcapsules.

### (Comparative Example 5)

A polymerization reaction vessel was charged with water (250 parts by weight), sodium chloride (70 parts by weight) as a dispersion stabilizer, colloidal silica (product of Adeka corporation, 20 wt%) (45 parts by weight), and a diethanolamine-adipic acid condensate (0.5 parts by weight), to prepare an aqueous dispersion medium.

Subsequently, to the aqueous dispersion medium was added an oily substance consisting of acrylonitrile (AN) (65 parts by weight), methacrylonitrile (MAN) (35 parts by weight), and ethylene glycol dimethacrylate (1.5 parts by weight) as polymerizable monomers; azobis (2,4-dimethyl valeronitrile) (0.5 parts by weight) as a polymerization initiator; and isobutane (25 parts by weight) as a volatile liquid. The mixture was suspended to prepare a dispersion liquid.

The obtained dispersion liquid was stirred and mixed with a homogenizer, charged into a pressure polymerization vessel purged with nitrogen, and reacted at a pressure of 0.5 MPa for eight hours at 60°C to produce a reaction product. The obtained reaction product was filtered and rinsed with water repeatedly, and then dried. Thus, thermal expansion microcapsules (Ts = 110°C, Tmax = 165°C) were obtained.

A masterbatch was obtained in the same manner as in Example 5, except that the obtained thermal expansion microcapsules were used.

### (Evaluation)

The masterbatches obtained in the examples and comparative examples were evaluated as follows. The results are shown in Table 1.

### (1) Expansion ratio

The obtained masterbatch (4 parts by weight) was added to a thermoplastic elastomer (100 parts by weight) (Rabalon MJ4300C, product of Mitsubishi Chemical Corporation), and the mixture was injection-molded to produce a molded product. The expansion ratio was calculated from the ratio of the specific gravity of the thermoplastic elastomer itself to the specific gravity of the molded product.

The evaluation was carried out by defining an expansion ratio of less than 1.3 as '×", an expansion ratio of not less than 1.3 but less than 1.6 as "Δ", and an expansion ratio of not less than 1.6, as "o".

### (2) Presence of open cells

A section of the molded product obtained in the evaluation (1) was observed with a scanning electron microscope at a magnification of 40 times, and the presence of open cells with a size of not less than 200 µm was checked in an any area of 2 mm × 2 mm. The evaluation was carried out by defining the presence of three or more open cells as "×", two open cells as "Δ", and one or no open cell as "o".

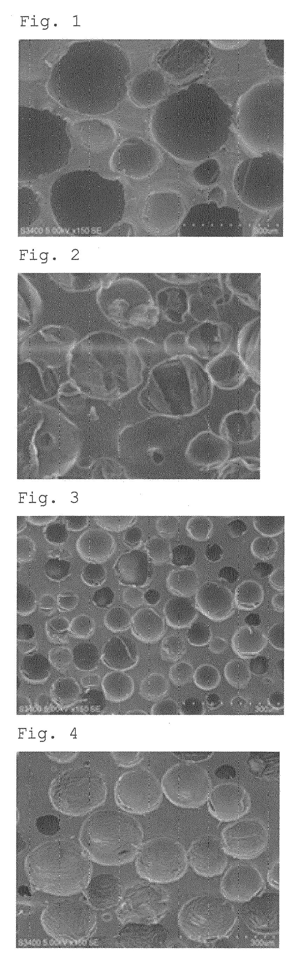

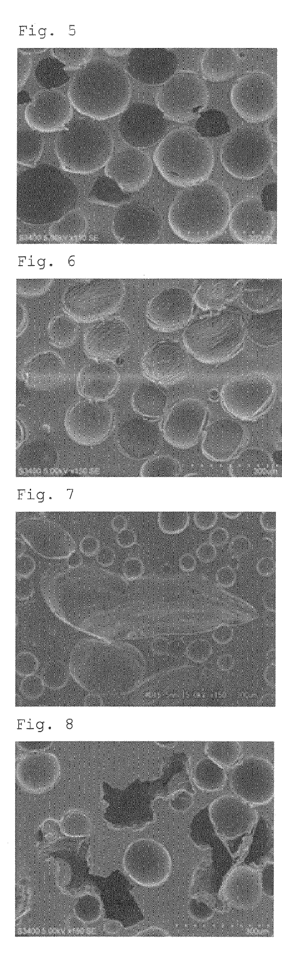

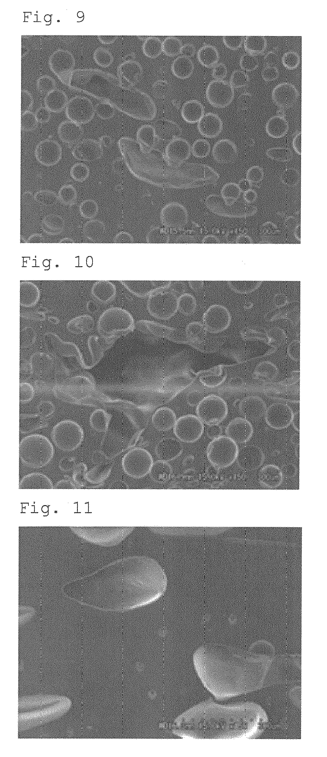

Figs. 1 to 11 show the scanning electron micrographs of the sections of the molded products produced from the masterbatches of Examples 1 to 6 and Comparative Examples 1 to 5.

**[Table 1]**

| | Foamable resin composition | | | | | | | | | | | | | Evaluation | | | |
|---|---|---|---|---|---|---|---|---|---|---|---|---|---|---|---|---|---|
| | Thermoplastic resin | Thermal expansion microcapsules | | | | | Chemical foaming agent | | | | | Ts-Tc (°C) | Talc or silica | | | | |
| | | Ts (°C) | Tmax (°C) | Δ T1/2 (°C) | Amount of carboxyl group-containing monomer (wt%) | Cross-linked and/or heat-curable | Main agent | Foaming aid | Main agent Foaming aid | Tc (°C) | Decomposition product | | | Foaming rate | | Open cells | |
| Example 1 | LDPE | 156 | 209 | 83 | 20 | Heat-curable | ADCA | Zinc stearate | 90:10 | 168 | N₂, CO | -12 | Surface of microcapsules | 1.8 | ○ | Closed cells | ○ |
| Example 2 | LDPE ' | 138 | 198 | 48 | 0 | Cross-finked | ADCA | Zinc stearate | 90:10 | 168 | N₂, CO | -30 | Surface of microcapsules | 1.8 | ○ | Closed cells | ○ |
| Example 3 | LDPE | 160 | 200 | 41 | 25 | Cross-linked | ADCA | Zinc stearate | 90:10 | 168 | N₂, CO | -8 | Surface of microcapsules | 1.8 | ○ | Closed cells | ○ |
| Example 4 | LDPE | 171 | 255 | 71 | 34 | Heat-curable | ADCA | Zinc stearate | 90:10 | 168 | N₂, CO | 3 | Surface of microcapsules | 1.9 | ○ | Closed cells | ○ |
| Example 5 | LDPE | 156 | 209 | 83 | 20 | Heat-curable | ADCA | Urea | 90:10 | 150 | N₂, CO | 6 | Surface of microcapsules | 1.8 | ○ | Closed cells | ○ |
| Example 6 | LDPE | 156 | 209 | 83 | 20 | Heat-curable | Sodium hydrogen carbonate | - | 100:0 | 150 | CO₂. Water | 6 | Surface of microcapsules | 1.9 | ○ | Closed cells | ○ |
| Comparative Example 1 | LDPE | 156 | 209 | 83 | 20 | Heat-curable | ADCA | - | 100:0 | 205 | N₂, CO | -49 | Surface of microcapsules | 1.2 | × | Open cells | × |
| Comparative Example 2 | LDPE | 171 | 255 | 71 | 34 | Hear-curable | ADCA | Urea | 90:10 | 150 | N₂, CO | 21 | Surface of microcapsules | 1.5 | Δ | Open cells | Δ |
| Comparative Example 3 | LDPE | 160 | 200 | 41 | 25 | Cross-linked | Sodium hydrogen carbonate | - | 100:0 | 150 | CO₂, Water | 10 | Surface of microcapsules | 1.6 | Δ | Open cells | Δ |
| Comparative Example 4 | LDPE | 145 | 183 | 53 | Detected | Non-cross-linked | ADCA | Zinc stearate | 90:10 | 168 | N₂, CO | -23 | Surface of microcapsules | 1.2 | × | Open cells | × |
| Comparative Example 5 | LDPE | 110 | 165 | 65 | 0 | Cross-linked | ADCA | Urea | 90:10 | 150 | N₂. CO | -40 | Surface of microcapsules | 1.1 | × | Open cells | × |

### INDUSTRIAL APPLICABILITY

The present invention can provide a foamable resin composition which enables foam molding at high expansion ratios and reduction of open cells. The present invention can also provide a foam molded body produced from the foamable resin composition. Use of the foamable resin composition of the present invention for foam molding can also solve the problem of mold contamination because the gas generated by the decomposition of a chemical foaming agent is taken into thermal expansion microcapsules and thus the gas does not come out of the molded product during molding.

## Claims

1. A foamable resin composition comprising:
a thermoplastic resin,
thermal expansion microcapsules, and
a chemical foaming agent,
wherein Ts is not lower than 120°C, Tmax is not lower than 190°C, and Ts - Tc is not lower than -30°C and not higher than 6°C, where Ts denotes a foaming starting temperature of the thermal expansion microcapsules as determined with a heating rate of 5°C/min in thermal mechanical analysis, Tmax denotes a maximum foaming temperature of the thermal expansion microcapsules as determined with a heating rate of 5°C/min in thermal mechanical analysis, and Tc denotes a decomposition temperature of the chemical foaming agent as determined with a heating rate of 2°C/min in thermogravimetric analysis,
wherein the thermal expansion microcapsules are microcapsules that comprise a volatile liquid as a core agent encapsulated by a shell polymer obtainable from a polymerizable monomer and a heat-curable resin not containing a radical-polymerizable double bond, wherein the polymerizable monomer comprises a carboxyl group-containing monomer and the heat-curable resin contains a functional group able to react with a carboxyl group,
wherein the chemical foaming agent consists of a main agent and a foaming aid, the foaming aid being selected from the group consisting of: zinc stearate, urea, calcium stearate, calcium carbonate, and zinc oxide,
wherein the ratio of the amount of thermal expansion microcapsules in the total amount of the thermal expansion microcapsules and the chemical foaming agent is 10 to 95 wt%.

2. The foamable resin composition according to claim 1,
wherein a decomposed product of the chemical foaming agent comprises nitrogen gas, carbon monoxide gas, carbon dioxide gas, or water.

3. The foamable resin composition according to claim 1 or 2, wherein ΔT1/2 is not lower than 50°C, where ΔT1/2 denotes a temperature range having an expansion ratio of not less than a half of the expansion ratio at the maximum foaming temperature of the thermal expansion microcapsules as determined with a heating rate of 5°C/min in thermal mechanical analysis.

4. The foamable resin composition according to claim 1, 2 or 3, further comprising talc or silica.

5. The foamable resin composition according to claim 4, wherein the thermal expansion microcapsules are provided with the talc or silica on the surface.

6. The foamable resin composition according to any of claims 1 to 5, wherein the main agent of the chemical foaming agent is at least one selected from the group consisting of: sodium hydrogen carbonate; azodicarbonamide (ADCA); dinitroso pentamethylene tetramine (DPT); and 4,4'-oxybis(benzene sulfonyl hydrazide) (OBSH).

7. The foamable resin composition according to any of claims 1 to 6, wherein the total amount of the thermal expansion microcapsules and the chemical foaming agent is 10 to 90 parts by weight, based on 100 parts of the thermoplastic resin.

8. The foamable resin composition according to any of claims 1 to 7, wherein the foaming aid is selected from the group consisting of: zinc stearate, urea, calcium stearate, and zinc oxide.

9. A foam molded body which is a foam-molded product of the foamable resin composition according to any of claims 1 to 8.

## Patentansprüche

1. Schäumbare Harzzusammensetzung, umfassend:
ein thermoplastisches Harz,
Wärmeausdehnungsmikrokapseln und
ein chemisches Schäumungsmittel,
wobei Ts nicht niedriger als 120 °C ist, Tₘₐₓ nicht niedriger als 190 °C ist und Ts - Tc nicht niedriger als -30 °C und nicht höher als 6 °C ist, wobei Ts eine mit einer Heizrate von 5 °C/min in thermisch mechanischer Analyse bestimmte Schäumungsstarttemperatur der Wärmeausdehnungsmikrokapseln bezeichnet, Tₘₐₓ eine mit einer Heizrate von 5 °C/min in thermisch mechanischer Analyse bestimmte maximale Schäumungstemperatur der Wärmeausdehnungsmikrokapseln bezeichnet und Tc eine mit einer Heizrate von 2 °C/min in thermogravimetrischer Analyse bestimmte Zersetzungstemperatur des chemischen Schäumungsmittels bezeichnet,
wobei die Wärmeausdehnungsmikrokapseln Mikrokapseln sind, die eine flüchtige Flüssigkeit als ein Kernmittel umfassen, das durch ein Hüllpolymer eingekapselt ist, das aus einem polymerisierbaren Monomer und einem wärmehärtbaren Harz erhältlich ist, das keine radikalpolymerisierbare Doppelbindung enthält, wobei das polymerisierbare Monomer ein Carboxylgruppen-haltiges Monomer umfasst und das wärmehärtbare Harz eine funktionelle Gruppe enthält, die mit einer Carboxylgruppe reagieren kann,
wobei das chemische Schäumungsmittel aus einem Hauptwirkstoff und einer Schäumungshilfe besteht, wobei die Schäumungshilfe aus der aus Zinkstearat, Urea, Kalziumstearat, Kalziumkarbonat und Zinkoxid bestehenden Gruppe ausgewählt ist,
wobei das Verhältnis der Menge der Wärmeausdehnungsmikrokapseln in der Gesamtmenge der Wärmeausdehnungsmikrokapseln und des chemischen Schäumungsmittels 10 bis 95 Gewichts-% beträgt.

2. Schäumbare Harzzusammensetzung nach Anspruch 1,
wobei ein Zersetzungsprodukt des chemischen Schäumungsmittels Stickstoffgas, Kohlenstoffmonoxidgas, Kohlenstoffdioxidgas oder Wasser umfasst.

3. Schäumbare Harzzusammensetzung nach Anspruch 1 oder 2,
wobei ΔT1/2 nicht niedriger als 50 °C ist, wobei ΔT1/2 einen Temperaturbereich bezeichnet, der ein Ausdehnungsverhältnis von nicht weniger als einer Hälfte des Ausdehnungsverhältnisses bei der mit einer Heizrate von 5 °C/min in thermisch mechanischer Analyse bestimmten maximalen Schäumungstemperatur der Wärmeausdehnungsmikrokapseln aufweist.

4. Schäumbare Harzzusammensetzung nach Anspruch 1, 2 oder 3, ferner umfassend Talkum oder Silika.

5. Schäumbare Harzzusammensetzung nach Anspruch 4, wobei die Wärmeausdehnungsmikrokapseln mit dem Talkum oder Silika auf der Oberfläche versehen sind.

6. Schäumbare Harzzusammensetzung nach einem der Ansprüche 1 bis 5, wobei der Hauptwirkstoff des chemischen Schäumungsmittels wenigstens eines ist, das aus der aus Natriumhydrogenkarbonat, Azodikarbonamid (ADCA), Dinitropentamethylentetramin (DPT) und 4,4'-Oxybis-(Benzensulfonylhydrazid) (OBSH) bestehenden Gruppe ausgewählt ist.

7. Schäumbare Harzzusammensetzung nach einem der Ansprüche 1 bis 6, wobei die Gesamtmenge der Wärmeausdehnungsmikrokapseln und des chemischen Schäumungsmittels 10 bis 90 Gewichtsanteile beträgt basierend auf 100 Gewichtsanteilen des thermoplastischen Harzes.

8. Schäumbare Harzzusammensetzung nach einem der Ansprüche 1 bis 7,
wobei die Schäumungshilfe aus der aus Zinkstearat, Urea, Kalziumstearat und Zinkoxid bestehenden Gruppe ausgewählt ist.

9. Geschäumter Formkörper, der ein geschäumtes Formprodukt aus schäumbarer Harzzusammensetzung nach einem der Ansprüche 1 bis 8 ist.

## Revendications

1. Composition de résine moussante comprenant :
une résine thermoplastique,
des microcapsules d'expansion thermique, et
un agent moussant chimique,
dans laquelle Ts n'est pas inférieure à 120°C, Tmax n'est pas inférieure à 190°C, et Ts - Tc n'est pas inférieure à -30°C et n'est pas supérieure à 6°C, où Ts indique une température de démarrage de moussage des microcapsules d'expansion thermique comme déterminée avec une vitesse de chauffage de 5°C/min dans une analyse mécanique thermique, Tmax indique une température de moussage maximale des microcapsules d'expansion thermique comme déterminée avec une vitesse de chauffage de 5°C/min dans une analyse mécanique thermique, et Tc indique une température de décomposition de l'agent moussant chimique comme déterminée avec une vitesse de chauffage de 2°C/min dans une analyse thermogravimétrique,
dans laquelle les microcapsules d'expansion thermique sont des microcapsules qui comprennent un liquide volatil comme un agent de noyau encapsulé par un polymère d'enveloppe pouvant être obtenu à partir d'un monomère polymérisable et d'une résine thermodurcissable ne contenant pas une double liaison radicalairement polymérisable, dans laquelle le monomère polymérisable comprend un monomère contenant un groupe carboxyle et la résine thermodurcissable contient un groupe fonctionnel apte à réagir avec un groupe carboxyle,
dans laquelle l'agent moussant chimique est constitué d'un agent principal et d'un auxiliaire moussant, l'auxiliaire moussant étant choisi dans le groupe constitué de : stéarate de zinc, urée, stéarate de calcium, carbonate de calcium, et oxyde de zinc,
dans laquelle le rapport de la quantité de microcapsules d'expansion thermique dans la quantité totale des microcapsules d'expansion thermique et de l'agent moussant chimique est de 10 à 95 % en masse.

2. Composition de résine moussante selon la revendication 1,
dans laquelle un produit décomposé de l'agent moussant chimique comprend du gaz d'azote, du gaz de monoxyde de carbone, du gaz de dioxyde de carbone, ou de l'eau.

3. Composition de résine moussante selon la revendication 1 ou 2,
dans laquelle ΔT1/2 n'est pas inférieur à 50°C, où ΔT1/2 indique un intervalle de température présentant un rapport d'expansion qui n'est pas inférieur à une moitié du rapport d'expansion à la température de moussage maximale des microcapsules d'expansion thermique comme déterminée avec une vitesse de chauffage de 5°C/min dans une analyse mécanique thermique.

4. Composition de résine moussante selon la revendication 1, 2 ou 3, comprenant de plus de la stéatite ou de la silice.

5. Composition de résine moussante selon la revendication 4, dans laquelle les microcapsules d'expansion thermique sont munies de la stéatite ou silice sur la surface.

6. Composition de résine moussante selon l'une quelconque des revendications 1 à 5, dans laquelle l'agent principal de l'agent moussant chimique est au moins un choisi dans le groupe constitué de :
hydrogénocarbonate de sodium ; azodicarbonamide (ADCA) ; dinitroso pentaméthylènetétramine (DPT) ; et 4,4'-oxybis(benzènesulfonyl-hydrazide) (OBSH).

7. Composition de résine moussante selon l'une quelconque des revendications 1 à 6, dans laquelle la quantité totale des microcapsules d'expansion thermique et de l'agent moussant chimique est de 10 à 90 parties en masse, rapporté à 100 parties en masse de la résine thermoplastique.

8. Composition de résine moussante selon l'une quelconque des revendications 1 à 7,
dans laquelle l'auxiliaire moussant est choisi dans le groupe constitué de : stéarate de zinc, urée, stéarate de calcium, et oxyde de zinc.

9. Corps moulé de mousse qui est un produit moulé de mousse de la composition de résine moussante selon l'une quelconque des revendications 1 à 8.
